# Europäisches Patentamt
# European Patent Office
# Office européen des brevets

(19)

(11) Veröffentlichungsnummer: **0 015 016**
**B2**

(12) **NEUE EUROPÄISCHE PATENTSCHRIFT**

(45) Veröffentlichungstag der neuen Patentschrift:
02.09.87

(51) Int. Cl.⁴: **C 01 D 5/18**

(21) Anmeldenummer: **80200086.9**

(22) Anmeldetag: **31.01.80**

(54) Verfahren zur Herstellung von wasserfreiem Natriumsulfat aus Glaubersalz.

(30) Priorität: 06.02.79 DE 2904345

(43) Veröffentlichungstag der Anmeldung:
03.09.80 Patentblatt 80/18

(45) Bekanntmachung des Hinweises auf die Patenterteilung:
11.08.82 Patentblatt 82/32

(45) Bekanntmachung des Hinweises auf die Entscheidung über den Einspruch:
02.09.87 Patentblatt 87/36

(84) Benannte Vertragsstaaten:
CH DE FR IT

(56) Entgegenhaltungen:
DE-B-1 150 368
DE-B-1 519 910
DE-B-1 519 911
DE-B-1 519 915
DE-B-2 246 568
DE-C-1 089 730
DE-C-1 108 184
US-A-2 459 302
US-A-2 631 926

Dale W. Kaufmann, SODIUM CHLORIDE, Amer. Chem. Society, Reinhold Publ. Corp. New York, 1960, S, 245/46
A.W. Bamforth, Crystallization, Leonard Hill-London, 1965, S.98/99
Messing R., Wöhlke W., Chemie-Ingenieur-Technik 45 (1973) 3, S. 106/109

(73) Patentinhaber: **METALLGESELLSCHAFT AG, Reuterweg 14 Postfach 3724, D-6000 Frankfurt/M.1 (DE)**

(72) Erfinder: **Berger, Fritz, Mühlstrasse 32, D-6451 Neuberg 2 (DE)**
Erfinder: **Dittmar, Heinz, Dipl.- Ing., Heinrich-Heine- Strasse 18, D-6360 Friedberg (DE)**
Erfinder: **Rode, Ernst, Römerberg 13, D-6000 Frankfurt am Main (DE)**

(74) Vertreter: **Rieger, Harald, Dr., Reuterweg 14, D-6000 Frankfurt am Main (DE)**

EP 0 015 016 B2

## Beschreibung

Die Erfindung betrifft ein Verfahren zur Herstellung von wasserfreiem Natriumsulfat aus Glaubersalz durch Schmelzen des Glaubersalzes im eigenen Kristallwasser in einem Schmelzkessel zur Ausbildung einer Schmelzlauge, die zum Teil im Kreislauf über einen indirekten Wärmeaustauscher geführt wird, Verdampfen von Kristallwasser in mehreren Verdampferstufen, Abzug der Brüden aus den Verdampferstufen und Verwenden der Brüden zum Beheizen der nächstfolgenden Verdampferstufe, Beheizen des zum Schmelzkessel gehörenden Wärmeaustauschers durch Brüden aus der Endstufe der Verdampfung, wobei man die Brüden aus der Endstufe mit einer Temperatur von 15 bis 30°C über der Schmelztemperatur des Glaubersalzes einsetzt, eine Erwärmung der Schmelzlauge um 1 bis 3°C pro Durchlauf durch den zum Schmelzkessel gehörenden Wärmeaustauscher erreicht und die Brüden im Wärmeaustauscher bis auf Restbrüden verbraucht, Abziehen einer natriumsulfatreichen Lauge aus einem Eindicker, Abtrennen des Natriumsulfats aus der Lauge in einer Trennvorrichtung und Zuführen des Überlaufs aus dem Eindicker in ein Puffergefäß.

Ein solches Verfahren ist aus DE-B-15 19 911 bekannt. Bei diesem Verfahren wird eine in Reihe geschaltete mehrstufige Verdampferanlage mit Mutterlauge beschickt; dem Schmelzkessel wird ein Gemisch aus Glaubersalzschmelze, Mutterlauge und Salzbrei aus den Verdampferstufen zugeführt.

Aus der DE-B-11 50 368 ist ein Verfahren zur Herstellung von wasserfreiem Natriumsulfat bekannt, bei dem eine mehrstufige Verdampferanlage mit einem Laugengemisch aus Glaubersalzschmelze und Mutterlauge beschickt wird. Ein Schmelzkessel fehlt bei diesem Verfahren.

Zur Herstellung von wasserfreiem Natriumsulfat ist es ferner bekannt, Glaubersalz durch Einleiten heißer Mutterlauge aus einem Verdampfer zu schmelzen, das entwässerte Salz außerhalb des Kessels von der Mutterlauge zu trennen und diese in den Verdampfer zurückzuführen, wobei das Abtrennen der Mutterlauge im Anschluß an das Aufschmelzen des Hydrats durchgeführt, der dabei erhaltenen Mutterlauge ein Teil des Abdampfes der Eindampfung zugemischt und diese Mutterlauge vor dem Einleiten in den Verdampfer in einem Wärmeaustauscher mit einem weiteren Teil des Abdampfes aus dem Verdampfer aufgeheizt wird (DE-C-1 089 730).

Der Erfindung liegt die Aufgabe zugrunde, wasserfreies Natriumsulfat aus Glaubersalz nach einem einfachen, energiesparenden und somit wirtschaftlichen Verfahren herzustellen.

Diese Aufgabe wird erfindungsgemäß dadurch gelöst, daß man dem Schmelzkessel nur Glaubersalz und im Kreislauf geführte Schmelzlauge zuführt, Schmelzlauge aus dem Schmelzkessel und den Überlauf aus dem Eindicker im Puffergefäß zu einem Laugengemisch mischt, das Laugengemisch auf die verschiedenen Verdampferstufen verteilt, etwa die Hälfte der Brüden der ersten Verdampferstufe in einen mit Frischdampf beschickten Dampfstrahl-Brüdenverdichter leitet und den Mischdampf aus dem Brüdenverdichter zum Beheizen der ersten Verdampferstufe verwendet, mit der anderen Hälfte der Brüden der ersten Verdampferstufe die nächste Verdampferstufe beheizt und den Salzbrei aus jeder Verdampferstufe direkt in den Eindicker leitet.

Man führt jeweils einen Teilstrom des Laugengemisches aus dem Puffergefäß den verschiedenen Verdampferstufen zu, wobei die Aufteilung unterschiedlich erfolgen kann. Im Schmelzkessel wird durch den Zwangsumlauf der Schmelze gleichzeitig eine Rührwirkung bewirkt, so daß spezielle Rührvorrichtungen entbehrlich sind. Das Verfahren ermöglicht eine vollkontinuierliche Arbeitsweise, ohne daß Störungen im Dauerbetrieb auftreten. Eine spezielle Überwachung ist nicht erforderlich. Durch eine genau abgestimmte Fließgeschwindigkeit auf der Schmelzlaugenseite wird eine Verkrustung der Wärmeaustauscherflächen vermieden. Das Verfahren zeichnet sich durch eine besonders schonende Behandlung des Schmelzgutes aus.

Ein weiterer Vorteil der Erfindung besteht darin, daß die Schmelze nur mit den eigenen Kristallen, die etwa ein Drittel der Gesamtmenge ausmachen, belastet wird. Dieser Feststoffanteil ist so fein, daß er bei dem erfindungsgemäß angewendetn Umwälzprinzip keine Erosionen in Apparateteilen und Pumpen hervorruft.

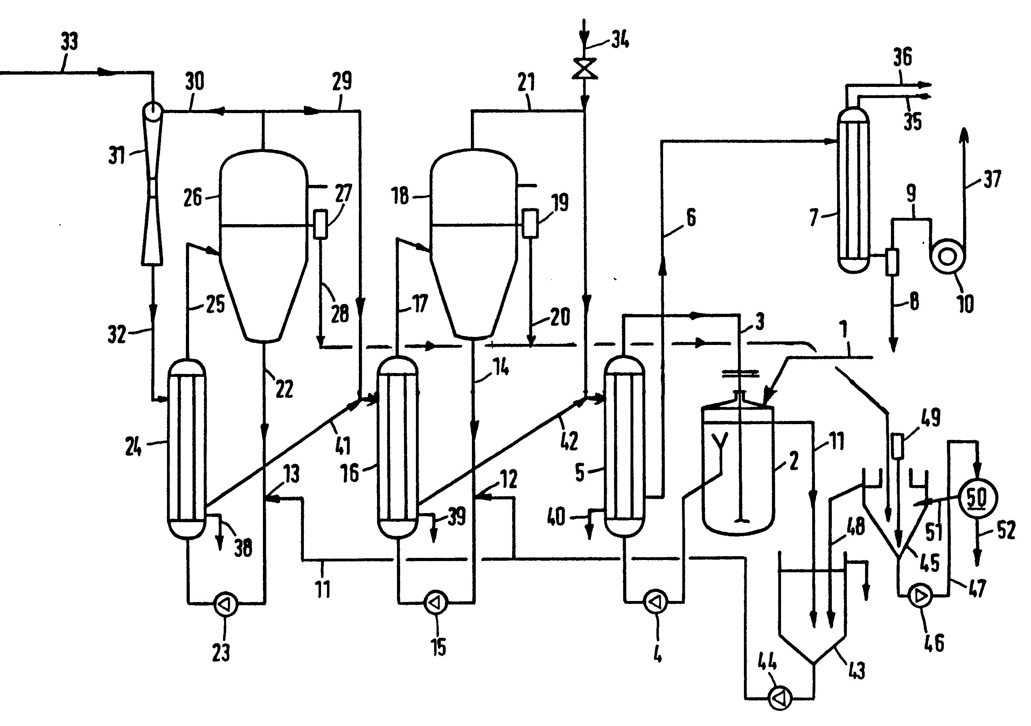

Die Erfindung ist in der Zeichnung beispielsweise und schematisch dargestellt und wird im folgenden näher beschrieben.

In der Figur bedeuten:
1 Glaubersalzaufgabe ($Na_2SO_4 \cdot 10H_2O$), 2 Schmelzkessel, 3 Umwälzleitung für Schmelzlauge, 4 Umwälzpumpe, 5 Wärmeaustauscher, 6 Entlüftungsleitung, 7 Kondensator für Oberflächenkondensation oder Mischkondensation, 8 Kondensatablauf, 9 Abzug für nicht kondensierbare Gase, 10 Vakuumpumpe, 11 Abzugsleitung für Schmelzlauge, 12 Aufgabeleitung für Schmelzlauge, 13 Aufgabeleitung für Schmelzlauge, 14 Zirkulationsleitung für einzudampfende Schmelzlauge, 15 Umwälzpumpe, 16 Wärmeaustauscher, 17 Eintrittsleitung Schmelzlauge in Verdampferkristallisator, 18, 19 Salzbreiaustragsgefäß, 20 Zuführungsleitung zum Eindicker 45, 21 Brüdenleitung, 22 Zirkulationsleitung für einzudampfende Schmelzlauge, 23 Umwälzpumpe, 24 Wärmeaustauscher, 25 Eintrittsleitung Schmelzlauge in Verdampferkristallisator 26, 27 Salzbreiaustragsgefäß, 28 Zuführungsleitung zum Eindicker 45, 29 Brüdenleitung, 30 Brüdenleitung zum Hochleistungs-Dampfstrahl-Brüdenverdichter 31, 32 Mischdampfleitung, 33 Treibdampfleitung, 34 Anfahr-Frischdampfleitung, 35 Kühlwasserzufuhr, 36 Kühlwasserableitung, 37 Abgasleitung, 38, 39, 40 Kondensatabführung, 41, 42 Entlüftungsleitungen, 43 Puffergefäß, 44 Transferpumpe, 45 Eindicker, 46 Salzbreipumpe, 47 Salzbreileitung zur Zentrifuge 50, 48 Mutterlauge-Überlaufleitung zum Puffergefäß 43, 49 Rührer, 51 Mutterlaugenleitung von Zentrifuge 50 zum Eindicker 45, 52 Feststoffaustrag-Zentrifuge

**Ausführungsbeispiel**

Der Schmelzkessel 2 ist im Anfahrbereich mit Heißwasser gefüllt welches mittels Umwalzpumpe 4 über Wärmeaustauscher 5 und Umwalzleitung 3 zirkuliert. Bei 1 werden 5700 kg pro Stunde Glaubersalz dem Schmelzkesse kontinuierlich zudosiert. Über die Abzugsleitung 11 wird die Schmelzlauge in das Puffergefäß 43 geführt und mittels Transferpumpe 44 in die Verdampferkristallisatoren 18 und 26 eingeleitet. Die Verdampferkristalisatoren 18 und 22 werden bis zu den Salzbreiaustragsgefäßen 19 und 27 gefüllt. Über die Zuführungsleitungen 20 und 28 fließt die gesättigte Natriumsulfatlösung in den Eindicker 45 mit laufendem Rührwerk 49 und 35 über die Leitung 48 zum Puffergefäß 43, so daß der geschlossene Kreislauf hergestellt ist. Mittels der Umwalzpumpen 15 und 23 wird der Zwangsumlauf in den Verdampferkristalsatoren 18 und 26 hergestellt Zur Erzeugung des Vakuums wird die Vakuumpumpe 10 in Betrieb gesetzt und die Anlage evakuiert, d.h. von Luft befreit. Nach Erreichen des erforderlichen Vakuums wird der Hochliestungs-Dampfstrahl-Brüdenverdichter 31 mit 1 700 kg pro Stunde Treibdampf beaufschlagt. Über die Mischdampfleitung 32 wird der Treibdampf in den Wärmeaustauscher 24 geführt, wodurch die Natriumsulfatlösung auf Siedetemperatur gebracht wird und die Verdampfung einsetzt. Es werden Brüden in Mengen von 2600 kg pro Stunde frei. Eine Teilmenge von 1 350 kg pro Stunde werden vom Hochleistungs-Dampfstrahl-Brüdenverdichter 31 angesaugt und als Mischdampf über Mischdampfleitung 32 dem Wärmeaustauscher 24 zugeführt. Der Rest der Bruden 1 250 kg pro Stunde, wird über Brüdenleitung 29 dem Wärmeaustauscher 16 zugeführt, wodurch im Verdampferkristallisator 18 1 200 kg pro Stunde Brüden erzeugt werden. Diese 1 200 kg pro Stunde Brüden werden über die Brüdenleitung 21 als Heizbrüden zur Schmelze des Glaubersalzes in den Wärmeaustauscher 5 geleitet, wobei die umgewälzte Schmelzlaugenmenge so gewählt ist, daß eine Erwärmung im Wärmeaustauscher 5 von 1,5° C erreicht wird. Die unkondensierbaren Gase aus dem Wärmeaustauscher 5 werden gemeinsam mit den unkondensierbaren Gasen aus den Wärmeaustauschern 24 und 16 über die Entlüftungsleitungen 41, 42 und 6 mit den geringen Anteilen an Restbrüden dem Kondensator 7, der als Misch- oder Oberflächenkondensator ausgebildet ist zugeleitet von der Vakuumpumpe 10 angesaugt und über den Abzug für nicht kondensierbare Gase 9 über Leitung 37 an die Atmosphäre abgegeben. Die in den Kondensator 7 über 35 zugeführte Kühlwassermenge wird entsprechend der geringen Menge Dampf einreguliert und über Kühlwasserableitung 36 abgeleitet. Die Kondensatabführungen 38, 39, 40 und 8 werden in der Regel barometrisch abgeführt.

Der Verbrauch an Frischdampf bezogen auf das Endprodukt, wasserfreiem Natriumsulfat einschließlich der Wärmeenergiezufuhr für die Schmelze und einer Wasserverdampfung von insgesamt 3 800 kg pro Stunde beträgt 0,63 kg pro 1 kg wasserfreies Natriumsulfat. Nach dem Verfahren der Erfindung werden 60 tato wasserfreies Natriumsulfat hergestellt.

Der Kühlwasserverbrauch ist äußerst niedrig. Er liegt zwischen 8 und 10 m³/Stunde, bezogen auf die Restbrüden

**Patentansprüche**

Verfahren zur Herstellung von wasserfreiem Natriumsulfat aus Glaubersalz durch Schmelzen des Glaubersalzes im eigenen Kristallwasser in einem Schmelzkessel zur Ausbildung einer Schmelzlauge, die zum Teil im Kreislauf über einen indirekten Wärmeaustauscher geführt wird, Verdampfen von Kristallwasser in mehreren Verdampferstufen, Abzug der Brüden aus den Verfolgenden Verdampferstufe, Beheizen des zum Schmelzkessel gehörenden Wärmeaustauschers (5) durch Brüden aus der Endstufe der Verdampfung, wobei man die Brüden aus der Endstufe mit einer Temperatur von 15 bis 30° C über der Schmelztemperatur des Glaubersalzes einsetzt, eine Erwärmung der Schmelzlauge um 1 bis 3° C pro Durchlauf durch den zum Schmelzkessel gehörenden Wärmeaustauscher erreicht und die Brüden im Wärmeaustauscher (5) bis auf Restbrüden verbraucht, Abziehen einer natriumsulfatreichen Lauge aus einem Eindicker (45), Abtrennen des Natriumsulfats aus der Lauge in einer Trennvorrichtung und Zuführen des Überlaufs aus dem Eindicker in ein Puffergefäß (43), dadurch gekennzeichnet, daß man dem Schmelzkessel (2) nur Glaubersalz und im Kreislauf geführte Schmelzlauge zuführt, Schmelzlauge aus dem Schmelzkessel und den Überlauf aus dem Eindicker im Puffergefäß (43) zu einem Laugengemisch mischt, das Laugengemisch auf die verschiedenen Verdampferstufen verteilt, etwa die Hälfte der Brüden der ersten Verdampferstufe (26) in einen mit Frischdampf beschickten Dampfstrahl-Brüdenverdichter (31) leitet und den Mischdampf aus dem Brüdenverdichter zum Beheizen der ersten Verdampferstufe verwendet, mit der anderen Hälfte der Brüden der ersten Verdampferstufe die nächste Verdampferstufe beheizt und den Salzbrei aus jeder Verdampferstufe direkt in den Eindicker (45) leitet.

## Claims

A process of producing anhydrous sodium sulphate from Glauber salt, which is melted in its own water of crystallization in a melting vessel to form a molten liquor, which is recycled in part through an indirect heat exchanger, wherein the water of crystallization is evaporated in a plurality of evaporator stages, the vapors are withdrawn from the evaporator stages and used to heat the next following evaporator stage, the heaf exchanger (5) associated with the melting vessel is heated by means of vapors from the final evaporator stage, the vapors from the final stage are used at a temperature which is 15 to 30°C above the melting temperature of the Glauber salt, the molten liquor is heated by 1 to 3°C per pass through the heat exchanger associated with the melting vessel, the vapors are consumed in the heat exchanger (5) with the exception of remaining vapors, a liquor which is rich in sodium sulphafe is withdrawn from a thickener (45), the sodium sulphate is separated from the liquor in a separator and the overflow from the thickener is supplied to a buffer vessel (43), characterized in that the melting vessel (2) is supplied only with Glauber salt and with recycled molten liquor, molten liquor from the melting vessel and the overflow from the thickener are mixed in the buffer vessel (43) to form a mixed liquor, said mixed liquor is fed in partial streams to the different evaporator stages, about one-half of the vapors from the first evaporator stage (26) is supplied to a steam jet vapor compressor (31), which is supplied with live steam, the mixed vapors from the vapor compressor are used to heat the first evaporator stage, the other half of the vapors from the first evaporator stage is used to heat the next following evaporator stage, and the salt sludge from each evaporator stage is directly supplied fo the thickener (45).

## Revendications

Procédé de préparation de sulfate de sodium anhydre à partir de sel de Glauber, par fusion du sel de Glauber dans sa propre eau de cristallisation dans un chaudron de fusion pour former une liqueur de fusion que l'on envoie en partie en circuit fermé dans un échangeur de chaleur par voie indirecte, par évaporation de l'eau de cristallisation dans plusieurs étages d'évaporateur, par évacuation des buées des étages d'évaporateur pour chauffer l'étage d'évaporateur venant immédiatement ensuite, par chauffage de l'échangeur de chaleur (5) faisant partie du chaudron de fusion par des buées provenant du dernier étage de l'évaporation, en mettant en oeuvre les buées provenant du dernier étage ayant une température supérieure de 15 à 30°C au point de fusion du sel de Glauber, en obtenant un chauffage de la liqueur de fusion de 1 à 3°C à chaque passage dans l'échangeur de chaleur faisant partie du chaudron de fusion et en consommant les buées dans l'échangeur de chaleur (5) à l'exception des buées résiduelles, par soutirage d'une liqueur riche en sulfate de sodium d'un épaississeur (45), par séparation du sulfate de sodium de la lessive dans un dispositif de séparation et par envoi du trop-plein de l'épaississeur dans un récipient tampon (43), caractérisé en ce qu'il consiste à n'envoyer au chaudron de fusion (2) que le sel de Glauber et la liqueur de fusion circulant en circuit fermé, à mélanger la liqueur de fusion provenant du chaudron de fusion et le trop-plein de l'épaississeur dans le récipient tampon (43) en un mélange de liqueur, à répartir le mélange de liqueur entre les divers étages de l'évaporateur, à envoyer environ la moitié des buées du premier étage de l'évaporateur (26) dans un condenseur (31) de buées à jet de vapeur alimenté en vapeur fraîche, et à utiliser le mélange de vapeur provenant du condenseur de buées pour chauffer le premier étage de l'évaporateur, à chauffer avec l'autre moitié des buées du premier étage de l'évaporateur l'étage venant immédiatement ensuite de l'évaporateur, et à envoyer la suspension de sel provenant de chaque étage d'évaporateur directement à l'épaississeur (45).

0 015 016